# EUROPEAN PATENT APPLICATION

(11) **EP 3 780 603 A1**
(43) Date of publication of application: **17.02.2021**
(21) Application number: 19776140.6
(22) Date of filing: 29.03.2019
(51) Int. Cl.: H04N 19/117, H04N 19/167, H04N 19/182, H04N 19/593

(54) **INTRA PREDICTION DEVICE, IMAGE ENCODING DEVICE, IMAGE DECODING DEVICE, AND PROGRAM**

(30) Priority: 30.03.2018 JP 2018066716
(71) Applicant: Nippon Hoso Kyokai, Tokyo 150-8001 (JP)
(72) Inventor: NEMOTO, Shimpei, Tokyo 157-8510 (JP); IWAMURA, Shunsuke, Tokyo 157-8510 (JP); ICHIGAYA, Atsuro, Tokyo 157-8510 (JP)
(74) Representative: Hernandez, Yorck
(86) International application number: PCT/JP2019/014366
(87) International publication number: WO 2019/189904

(57) **Abstract**

An intra predictor (intra prediction device) 170 for performing intra prediction of each of the blocks obtained by dividing images in units of frames that constitute a video includes: a filter determiner 172A configured to determine a filter to be used to generate a predicted pixel from among multiple types of filters for each pixel position in a target block of the intra prediction; and a predicted pixel generator 173 configured to generate the predicted pixel from reference pixels around the target block using the filter determined by the filter determiner 172A.

## Description

### Technical Field

The present invention relates to an intra prediction device, an image encoding device, an image decoding device and a program.

### Background Art

In recent years, ultra-high-resolution video technologies, including 8K-SHV as a typical example, have been becoming commonly used in the video encoding technology. The AVC/H.264 and HEVC/H.265 encoding schemes are known as techniques for transmitting a vast amount of video data.

Those encoding schemes adopt intra prediction that utilizes spatial correlations in a frame (see Non-Patent Literature 1, for example). In the intra prediction described in Non-Patent Literature 1, an encoding device uses previously decoded reference pixels around a target block to select the optimal mode from the total of 35 prediction modes of planar prediction, DC prediction and directional predication, and transmits information on the optimal mode to a decoding device.

Software (known as JEM) for evaluating the performance of the next generation video encoding schemes jointly developed by ISO/IEC SC29 WG11 and ITU-T SG16 WP3 Q6 adopts, for intra prediction, a 4-tap interpolation filter for interpolation among reference pixels, if needed, in some directional predictions and generates each predicted pixel from four prediction reference pixels. In doing so, the type of filter applied to a target block is determined depending on the block size of the target block. If the block size is less than or equal to a certain threshold, a bicubic filter is used to generate predicted pixels; otherwise, a Gaussian filter is used.

### Citation List

### Non-Patent Literature

Non-Patent Literature 1: Recommendation ITU-T H.265, (12/2016), "High efficiency video coding," International Telecommunication Union

### Summary of Invention

Intra prediction should essentially use a "steep" filter to generate predicted pixels at pixel positions nearer to reference pixels or use a "gentle" filter to generate predicted pixels at pixel positions farther from the reference pixels.

The conventional methods, however, apply only one type of filter to a target block. Thus, a problem with those conventional methods is that the prediction accuracy of intra prediction cannot be improved for a large block or an elongated block in which some pixels in the block are far from reference pixels.

In view of the above, an object of the present invention is to provide an intra prediction device, an image encoding device, an image decoding device and a program that can improve the prediction accuracy of intra prediction.

An intra prediction device according to a first feature performs intra prediction of each of the blocks obtained by dividing images in units of frames that constitute a video. The intra prediction device includes: a filter determiner configured to determine a filter to be used to generate a predicted pixel from among multiple types of filters for each pixel position in a target block of the intra prediction; and a predicted pixel generator configured to generate the predicted pixel from reference pixels around the target block using the filter determined by the filter determiner. When the filter determiner determines the filter for a pixel position in the target block, the filter determiner is configured to determine the filter depending on a distance between the pixel position and a position of a reference pixel nearest to the pixel position.

An intra prediction device according to a second feature performs intra prediction of each of the blocks obtained by dividing images in units of frames that constitute a video. The intra prediction device includes: a number-of-reference-pixels determiner configured to determine the number of prediction reference pixels to be used to generate a predicted pixel; and a predicted pixel generator configured to generate the predicted pixel by applying a filter to prediction reference pixels that are selected from reference pixels around a target block of the intra prediction and the number of which is determined by the number-of-reference-pixels determiner. The number-of-reference-pixels determiner is configured to determine the number of prediction reference pixels for each target block of the intra prediction or for each pixel position in a target block of the intra prediction.

An image encoding device according to a third feature includes the intra prediction device according to the first feature or the second feature.

An image decoding device according to a fourth feature includes the intra prediction device according to the first feature or the second feature.

A program according to a fifth feature causes a computer to function as the intra prediction device according to the first feature or the second feature.

The present invention provides an intra prediction device, an image encoding device, an image decoding device and a program that can improve the prediction accuracy of intra prediction.

### Brief Description of Drawings

Figure 1 illustrates a configuration of an image encoding device according to a first or a second embodiment.
Figure 2 illustrates a configuration of an image decoding device according to the first or the second embodiment.
Figure 3 illustrates a configuration of an intra predictor according to the first embodiment.
Figure 4 illustrates an example of a set of intra prediction modes that can be applied to a target block.
Figure 5 illustrates an example of a method of generating a predicted pixel using a filter.
Figure 6 illustrates an example of operations of a filter determiner according to the first embodiment.
Figure 7 illustrates an exemplary operation flow of the intra predictor according to the first embodiment.
Figure 8 illustrates an example of operations of a filter determiner according to a modification of the first embodiment.
Figure 9 illustrates a configuration of an intra predictor according to the second embodiment.
Figure 10 illustrates an exemplary operation flow of the intra predictor according to the second embodiment.
Figure 11 illustrates an exemplary operation flow of an intra predictor according to a modification of the second embodiment.

### Description of Embodiments

An image encoding device and an image decoding device according to embodiments will be described with reference to the drawings. The image encoding device and the image decoding device according to the embodiments encode and decode a moving image typified by MPEG. The same or similar reference numerals will be assigned to the same or similar portions in the following description of the drawings.

### <1. First Embodiment

### (1.1. Configuration of Image Encoding Device)

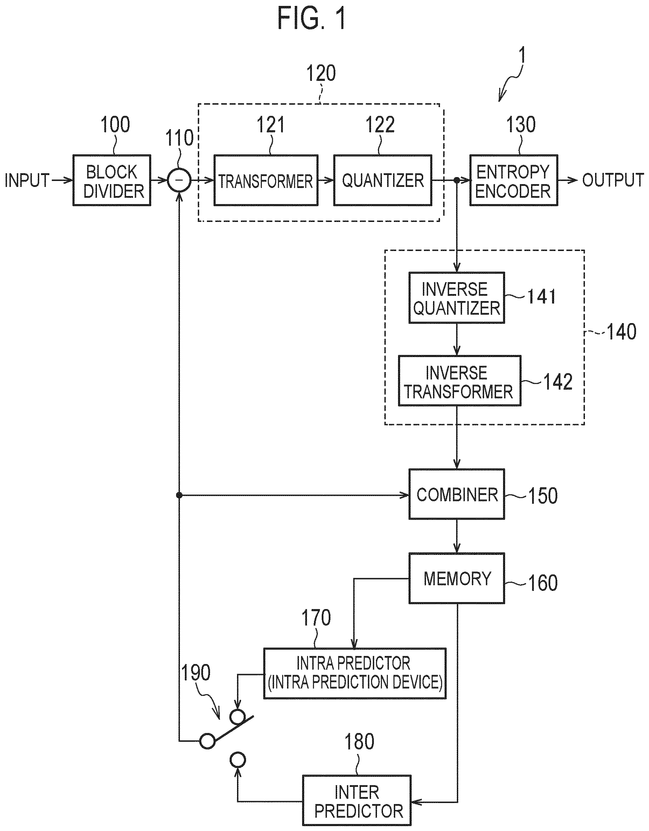

Figure 1 illustrates a configuration of an image encoding device 1 according to the present embodiment. As shown in Figure 1, the image encoding device 1 includes a block divider 100, a subtractor 110, a transformer 121, a quantizer 122, an entropy encoder 130, an inverse quantizer 141, an inverse transformer 142, a combiner 150, a memory 160, an intra predictor (intra prediction device) 170, an inter predictor 180 and a switcher 190.

The block divider 100 divides an input image in the unit of a frame (or a picture) into sub-areas in the form of blocks and outputs the resulting blocks to the subtractor 110. The size of the blocks may be 32×32 pixels, 16×16 pixels, 8×8 pixels, or 4×4 pixels. The shape of the blocks is not limited to square and may be rectangular. A block is the unit of encoding by the image encoding device 1 and of decoding by an image decoding device 2 and may also be referred to as a coding unit (CU).

The subtractor 110 calculates a prediction residual indicating the pixel-by-pixel differences between a block input from the block divider 100 and the predicted image (predicted block) corresponding to the input block. More specifically, the subtractor 110 calculates the prediction residual by subtracting the value of each pixel of the predicted image from the value of the corresponding pixel of the input block and outputs the calculated prediction residual to the transformer 121. The predicted image is input from the switcher 190, which is described below, to the subtractor 110.

The transformer 121 and the quantizer 122 constitute a transformer/quantizer 120 that executes an orthogonal transform process and a quantization process block by block.

The transformer 121 performs an orthogonal transform on a predicted residual input from the subtractor 110 to calculate transform coefficients and outputs the calculated transform coefficients to the quantizer 122. Examples of the orthogonal transform include the discrete cosine transform (DCT), the discrete sine transform and the Karhunen-Loeve transform.

The quantizer 122 quantizes transform coefficients input from the transformer 121 using a quantization parameter (Qp) and a quantization matrix to generate quantized transform coefficients. The quantization parameter (Qp) is a parameter that is equally applied to every transform coefficient in a block and controls the granularity of quantization. The quantization matrix is a matrix the elements of which are the quantization values used to quantize the respective transform coefficients. The quantizer 122 outputs information including the generated quantized transform coefficients to the entropy encoder 130 and the inverse quantizer 141.

The entropy encoder 130 performs entropy encoding of quantized transform coefficients input from the quantizer 122, compresses the resulting entropy-encoded quantized transform coefficients to generate encoded data (bitstream), and outputs the encoded data out of the image encoding device 1. Huffman coding and Context-Based Adaptive Binary Arithmetic Coding (CABAC) can be used for the entropy encoding. The entropy encoder 130 receives information related to predictions from the intra predictor 170 and the inter predictor 180. The entropy encoder 130 also performs entropy encoding of such information.

The inverse quantizer 141 and the inverse transformer 142 constitute an inverse quantizer/inverse transformer 140 that executes a dequantization process and an inverse orthogonal transform process block by block.

The inverse quantizer 141 performs the dequantization process corresponding to the quantization process performed by the quantizer 122. More specifically, the inverse quantizer 141 dequantizes quantized transform coefficients input from the quantizer 122 using the quantization parameter (Qp) and the quantization matrix to restore the transform coefficients and outputs the restored transform coefficients to the inverse transformer 142.

The inverse transformer 142 performs the inverse orthogonal transform process corresponding to the orthogonal transform process performed by the transformer 121. For example, if the transformer 121 performs the discrete cosine transform, the inverse transformer 142 performs the inverse discrete cosine transform. The inverse transformer 142 performs the inverse orthogonal transform on transform coefficients input from the inverse quantizer 141 to restore the prediction residual and outputs a restored prediction residual to the combiner 150.

The combiner 150 combines the restored prediction residual input from the inverse transformer 142 and the predicted image input from the switcher 190 pixel by pixel. The combiner 150 reconstructs (decodes) the block by adding the value of each pixel of the restored prediction residual to the value of the corresponding pixel of the predicted image, and outputs the reconstructed block to the memory 160. Such a reconstructed block may be called a previously decoded block.

The memory 160 stores reconstructed blocks input from the combiner 150. The memory 160 stores the reconstructed blocks in units of frames.

The intra predictor 170 generates an intra-predicted image by referring to previously decoded blocks adjacent to a target block to be predicted among the reconstructed blocks (previously decoded blocks) stored in the memory 160. The intra predictor 170 selects the optimal intra prediction mode and uses the selected intra prediction mode to perform intra prediction. A plurality of intra prediction modes, each corresponding to one of a plurality of prediction directions, are predefined. When intra prediction is carried out on a target pixel in a target block by referring to one or more reference pixels adjacent to the target block, the prediction direction is the direction from the target pixel to the one or more adjacent reference pixels. That is, the intra prediction modes (prediction directions) determine which of the adjacent reference pixels to be used to predict a pixel in the target block. The intra predictor 170 outputs the intra-predicted image to the switcher 190 and outputs information on the selected intra prediction mode to the entropy encoder 130.

The inter predictor 180 performs inter prediction in which a target block is predicted using, as reference images, reconstructed images (decoded images) in units of frames stored in the memory 160. In particular, the inter predictor 180 uses techniques such as block matching to calculate a motion vector and generates an inter-predicted image based on the motion vector. The inter predictor 180 selects the most suitable inter prediction method from an inter prediction method using multiple reference images (usually, bi-prediction) and an inter prediction method using single reference image (unidirectional prediction), and uses the selected inter prediction method to perform inter prediction. The inter predictor 180 outputs the generated inter-predicted image to the switcher 190 and outputs information on the selected inter prediction method and the motion vector to the entropy encoder 130.

The switcher 190 switches between an intra-predicted image input from the intra predictor 170 and an inter-predicted image input from the inter predictor 180 to output either the intra-predicted image or the inter-predicted image to the subtractor 110 and the combiner 150.

### (1.2. Configuration of Image Decoding Device)

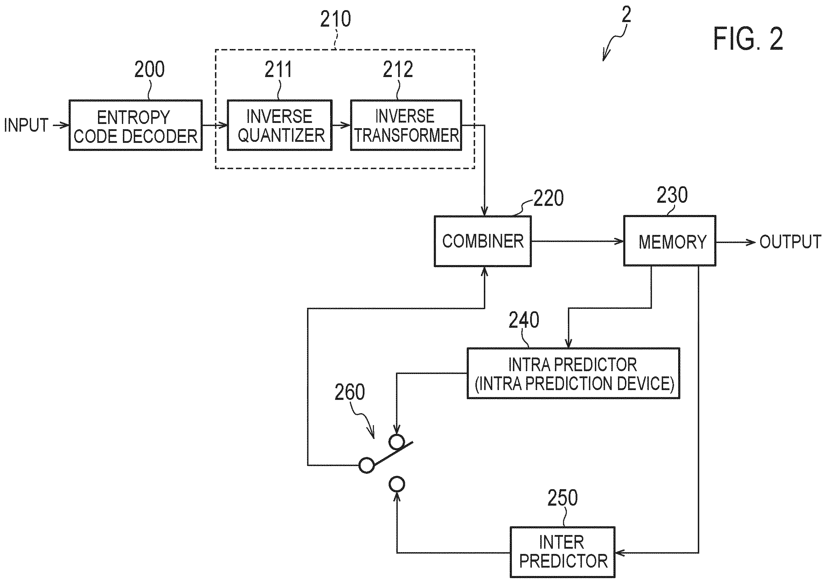

Figure 2 illustrates a configuration of an image decoding device 2 according to the present embodiment. As shown in Figure 2, the image decoding device 2 includes an entropy code decoder 200, an inverse quantizer 211, an inverse transformer 212, a combiner 220, a memory 230, an intra predictor 240, an inter predictor 250 and a switcher 260.

The entropy code decoder 200 decodes encoded data generated by the encoding device 1 and outputs the decoded quantized transform coefficients to the inverse quantizer 211. The entropy code decoder 200 also decodes the encoded data to obtain information related to predictions (intra prediction and inter prediction) and outputs the information related to predictions to the intra predictor 240 and the inter predictor 250. In particular, the entropy code decoder 200 outputs the information on the intra prediction mode to the intra predictor 240 and outputs the information on the inter prediction method and the motion vector to the inter predictor 250.

The inverse quantizer 211 and the inverse transformer 212 constitute an inverse quantizer/inverse transformer 210 that executes a dequantization process and an inverse orthogonal transform process block by block.

The inverse quantizer 211 performs the dequantization process corresponding to the quantization process performed by the quantizer 122 of the image encoding device 1. The inverse quantizer 211 dequantizes quantized transform coefficients input from the entropy code decoder 200 using the quantization parameter (Qp) and the quantization matrix to restore the transform coefficients and outputs the restored transform coefficients to the inverse transformer 212.

The inverse transformer 212 executes the inverse orthogonal transform process corresponding to the orthogonal transform process by the transformer 121 of the image encoding device 1. The inverse transformer 212 performs the inverse orthogonal transform on transform coefficients input from the inverse quantizer 211 to restore the prediction residual and outputs the restored prediction residual to the combiner 220.

The combiner 220 reconstructs (decodes) the original block by combining the prediction residual input from the inverse transformer 212 and the predicted image input from the switcher 260 pixel by pixel, and outputs the reconstructed block to the memory 230.

The memory 230 stores the reconstructed blocks input from the combiner 220. The memory 230 stores the reconstructed blocks in units of frames. The memory 230 outputs the reconstructed images (decoded images) in units of frames out of the image decoding device 2.

The intra predictor 240 generates an intra-predicted image by performing intra prediction by referring to the reconstructed blocks stored in the memory 230 and according to intra prediction information (an intra prediction mode) input from the entropy code decoder 200. More specifically, the intra predictor 240 generates the intra-predicted image by referring to the adjacent reference pixels determined according to the intra prediction mode in the reconstructed blocks (previously decoded blocks) stored in the memory 230. The intra predictor 240 outputs the intra-predicted image to the switcher 260.

The inter predictor 250 performs inter prediction in which a block is predicted using, as reference images, the reconstructed images (decoded images) in units of frames stored in the memory 160. The inter predictor 250 generates an inter-predicted image by performing inter prediction according to inter prediction information (e.g., motion vector information) input from the entropy code decoder 200 and outputs the inter-predicted image to the switcher 260.

The switcher 260 switches between an intra-predicted image input from the intra predictor 240 and an inter-predicted image input from the inter predictor 250 to output either the intra-predicted image or the inter-predicted image to the combiner 220.

### (1.3. Configuration of Intra Predictor)

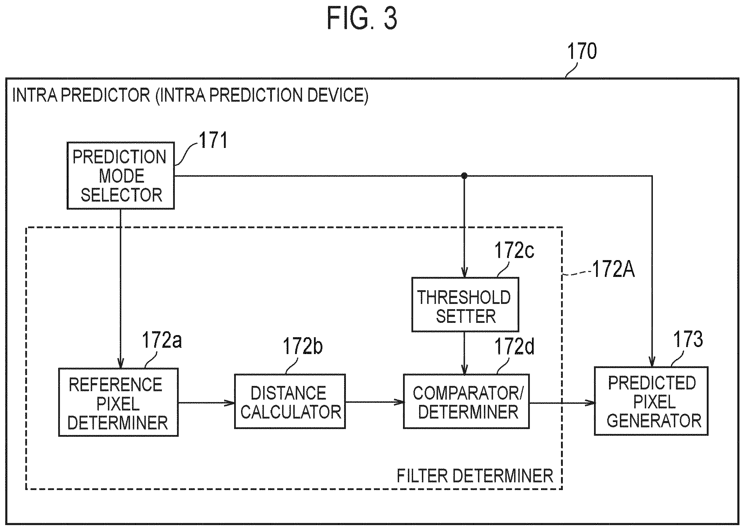

Figure 3 illustrates a configuration of the intra predictor 170 of the image encoding device 1 according to the present embodiment. The intra predictor 240 of the image decoding device 2 has a configuration similar to that of the intra predictor 170 of the image encoding device 1 and operates in a similar manner.

The intra predictor 170 performs intra prediction of each of the blocks obtained by dividing the original images in units of frames that constitute a video. A block to be intra-predicted is hereinafter referred to as a target block.

As shown in Figure 3, the intra predictor 170 includes a prediction mode selector 171, a filter determiner 172A and a predicted pixel generator 173.

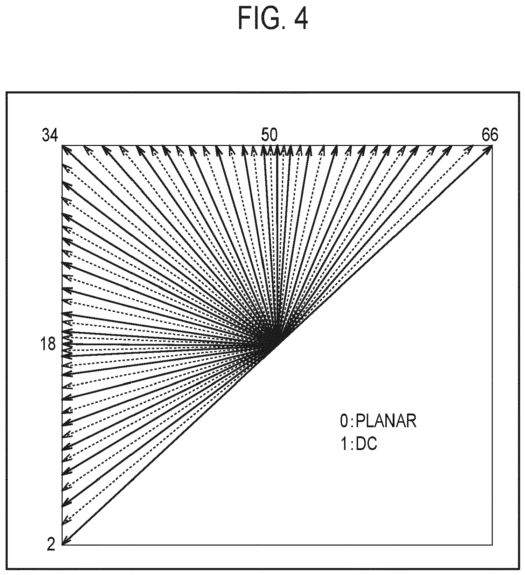

The prediction mode selector 171 selects an intra prediction mode to be applied to a target block and outputs the selected intra prediction mode to the filter determiner 172 and the predicted pixel generator 173. Information on the intra prediction mode selected by the prediction mode selector 171 is also output to the entropy encoder 130, which in turn encodes the information. The image decoding device 2 decodes the information on the intra prediction mode and selects the same intra prediction mode as that used in the image encoding device 1. Figure 4 illustrates an example of a set of intra prediction modes that can be applied to the target block. In the example in Figure 4, 67 intra prediction modes numbered 0 to 66 are illustrated. Intra prediction mode "0" indicates a planar prediction, intra prediction mode " 1" indicates a DC prediction, and intra prediction modes "2" to "66" indicate directional predications. The prediction mode selector 171 selects the optimal intra prediction mode based, for example, on the rate-distortion (RD) cost. For each of the directional predications, the direction of the arrow indicates the prediction direction, the origin of the arrow indicates the position of the prediction target pixel, and the end of the arrow indicates the reference pixels used for prediction of the prediction target pixel.

If the end of the arrow of a directional predication points at the exact coordinates (integer pixel position) of a reference pixel, the value of the reference pixel itself at that position is used as the predicted value, whereas if the end of the arrow points at coordinates between two reference pixels, an interpolation filter is applied to multiple reference pixels to determine the predicted value.

For each pixel position in the target block, if the intra prediction mode selected by the prediction mode selector 171 indicates a predetermined directional predication and a reference pixel in not at an integer pixel position, the filter determiner 172A determines, from among multiple types of filters, the filter (interpolation filter) to be used to generate a predicted pixel. In particular, the filter determiner 172A determines to apply a filter if the line extended in the direction of intra prediction from the pixel position of a prediction target pixel does not pass through any reference pixel at an integer position.

The predetermined directional predication refers to a directional predication that requires interpolation among reference pixels. For example, the directional predications in the horizontal direction (mode "18"), in the vertical direction (mode "50") and in the 45-degree directions (modes "2," "34" and "66") can refer to a reference pixel at an integer position and therefore does not apply any filter mentioned above. For the other modes, if the line extended in the direction of intra prediction from the pixel position of a target pixel passes through a reference pixel at an integer position, the filter determiner 172A determines not to apply any filter; otherwise, the filter determiner 172A determines to apply a filter. In the following, it is assumed that the filter determiner 172A has determined to apply a filter.

As used in the present embodiment, a filter refers to a 4-tap interpolation filter. For a prediction target pixel, such a filter is used to generate one predicted pixel from four prediction reference pixels. The prediction reference pixels refer to the reference pixels used for prediction of the target pixel (i.e., the reference pixels to which the filter is applied) among the adjacent reference pixels on the left of and on top of the target block. A filter in the present embodiment is a 4-tap interpolation filter and thus the number of prediction reference pixels is four.

The multiple types of filters refer to filters having different filter characteristics. The multiple types of filters include a bicubic filter and a Gaussian filter. The bicubic filter is a steep filter and the Gaussian filter is a gentle filter.

In the present embodiment, when the filter determiner 172A determines the filter for a pixel position in a target block, the filter determiner 172A determines the filter depending on the distance between the pixel position and the position of the reference pixel nearest to the pixel position. Since the filter determiner 172A determines the filter for each pixel position in a target block as mentioned above, it can select a suitable filter on a pixel-by-pixel basis in the target block. Moreover, because when the filter determiner 172A determines the filter for a pixel position, the filter determiner 172A determines the filter depending on the distance between the pixel position and the position of the reference pixel nearest to the pixel position, the filter determiner 172A can use a steep filter to generate a predicted pixel at a pixel position nearer to the reference pixel or can use a gentle filter to generate a predicted pixel at a pixel position farther from the reference pixel. In this manner, the prediction accuracy of intra prediction can be improved.

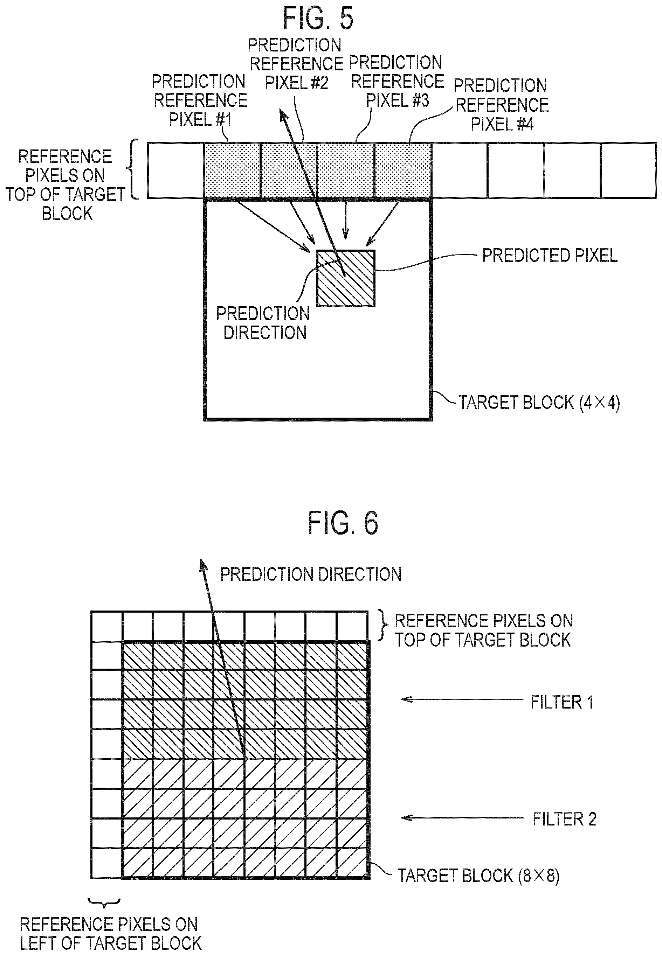

The predicted pixel generator 173 generates a predicted pixel from the prediction reference pixels using the filter determined by the filter determiner 172A for each pixel position in a target block. Figure 5 illustrates an example of a method of generating a predicted pixel using a filter. In Figure 5, it is assumed that the block size of the target block is 4×4 and a predicted pixel is to be generated for the pixel position (coordinate position) in the second row and the third column. The predicted pixel generator 173 generates the predicted pixel by applying the filter to the four prediction reference pixels #1 to #4 selected from among the reference pixels on top of the target block. In this way, the predicted pixel generator 173 generates predicted pixels for all the pixel positions in the target block and then outputs the block consisting of the generated predicted pixels as an intra-predicted image.

A configuration of the filter determiner 172A according to the present embodiment is now described. As shown in Figure 3, the filter determiner 172A includes a reference pixel determiner 172a, a distance calculator 172b, a threshold setter 172c and a comparator/determiner 172d.

The reference pixel determiner 172a determines the reference pixel nearest to each pixel position in a target block (i.e., the reference pixel to be used to calculate the distance). In particular, the reference pixel determiner 172a determines which of the reference pixels on top of and on the left of the target block to be used as the reference pixel nearest to the pixel position of a prediction target pixel according to the intra prediction mode selected by the prediction mode selector 171. While the prediction reference pixels used for intra prediction vary according to the intra prediction mode, the distance can be adequately calculated by determining the reference pixel to be used for the distance calculation according to the intra prediction mode. For example, the reference pixel determiner 172a determines to use a reference pixel on the left of the target block if the intra prediction mode is "2" to "34" or determines to use a reference pixel on top of the target block if the intra prediction mode is "35" to "66." The reference pixel determiner 172a outputs the position (coordinates) of the determined reference pixel to the distance calculator 172b.

The distance calculator 172b calculates the distance between the position of the reference pixel determined by the reference pixel determiner 172a and the position of the target pixel and outputs the calculated distance to the comparator/determiner 172d.

The threshold setter 172c sets one or more thresholds that are to be compared to the distance according to the intra prediction mode selected by the prediction mode selector 171. More specifically, the threshold setter 172c maintains a mapping table that defines a correspondence between intra prediction modes and thresholds, and sets the threshold corresponding to the intra prediction mode using the mapping table. While the prediction reference pixels used for intra prediction vary according to the intra prediction mode and the distances between the prediction reference pixels and the target pixel also vary accordingly, a suitable filter can be selected by setting the threshold according to the intra prediction mode. In the following description of the present embodiment, it is assumed that one threshold is used, but a plurality of thresholds may be used. The threshold setter 172c outputs the set threshold to the comparator/determiner 172d.

The comparator/determiner 172d determines the filter for the target pixel by comparing the distance calculated by the distance calculator 172b to the threshold set by the threshold setter 172c, and outputs the determined filter to the predicted pixel generator 173. For example, the comparator/determiner 172d determines to use a filter 1 for a target pixel the distance of which to the reference pixel is less than or equal to the threshold and determines to use a filter 2 for a target pixel the distance of which to the reference pixel is greater than the threshold. The filter 1 is steeper than the filter 2. The filter 1 may be a bicubic filter and the filter 2 may be a Gaussian filter.

Figure 6 illustrates an example of operations of the filter determiner 172A. In Figure 6, the block size of the target block is 8×8.

As shown in Figure 6, first, the reference pixel determiner 172a determines to use reference pixels on top of the target block as the reference pixels for calculating the distance because the intra prediction mode selected by the prediction mode selector 171 is in the range of "35" to "66." The threshold setter 172c sets the threshold that are to be compared to the distance according to the intra prediction mode selected by the prediction mode selector 171. In the following, it is assumed that the threshold set by the threshold setter 172c is "4."

Second, the distance calculator 172b calculates the distance between each pixel position in the target block and the corresponding reference pixel on top of the target block determined by the reference pixel determiner 172a. For example, the distance calculator 172b calculates that the distance is "1" for each pixel position in the first row of the target block, the distance is "2" for each pixel position in the second row of the target block, the distance is "3" for each pixel position in the third row of the target block, the distance is "4" for each pixel position in the fourth row of the target block, the distance is "5" for each pixel position in the fifth row of the target block, the distance is "6" for each pixel position in the sixth row of the target block, the distance is "7" for each pixel position in the seventh row of the target block, and the distance is "8" for each pixel position in the eighth row of the target block.

Third, the comparator/determiner 172d determines the filter for each pixel position in the target block by comparing the distance calculated by the distance calculator 172b to the threshold set by the threshold setter 172c. Given that the threshold set by the threshold setter 172c is "4," the distances between each pixel position in the first to fourth rows of the target block and the corresponding reference pixel on top of the target block is less than or equal to the threshold. Thus, the comparator/determiner 172d determines to use the filter 1 (e.g., a bicubic filter) for each pixel position in the first to fourth rows of the target block. In contrast, the distances between each pixel positions in the fifth to eighth rows of the target block and the corresponding reference pixel on top of the target block is greater than the threshold. Hence, the comparator/determiner 172d determines to use the filter 2 (e.g., a Gaussian filter) for each pixel positions in the fifth to eighth rows of the target block.

### (1.4. Exemplary Operation Flow of Intra Predictor)

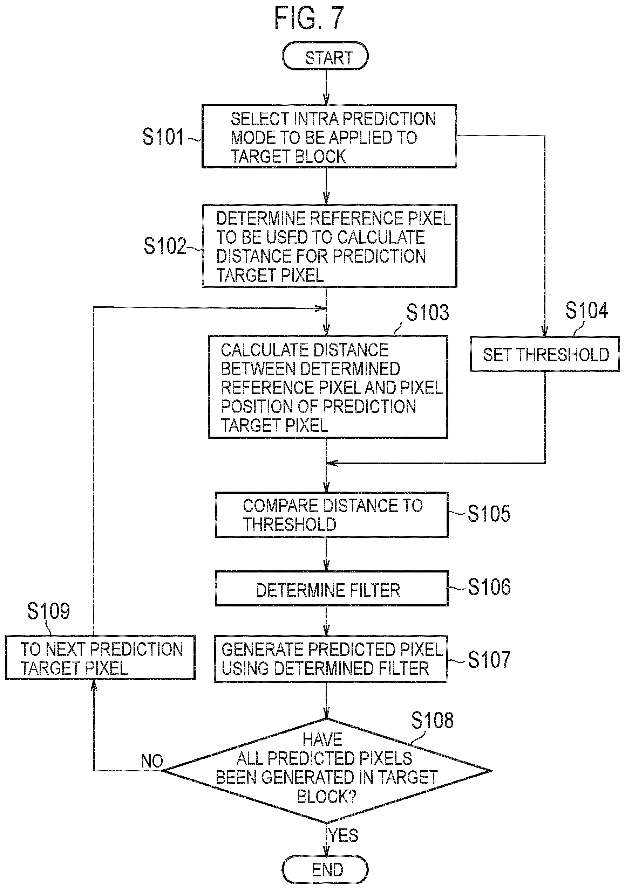

Figure 7 illustrates an exemplary operation flow of the intra predictor 170 of the image encoding device 1 according to the present embodiment.

As shown in Figure 7, in step S101, the prediction mode selector 171 selects an intra prediction mode to be applied to a target block.

In step S102, the reference pixel determiner 172a determines the reference pixel to be used for distance calculation for each pixel position in the target block according to the intra prediction mode selected by the prediction mode selector 171.

In step S103, the distance calculator 172b calculates the distance between the position of the reference pixel determined by the reference pixel determiner 172a and the position of a target pixel.

In step S104, the threshold setter 172c sets the threshold that is to be compared to the distance according to the intra prediction mode selected by the prediction mode selector 171.

In step S105, the comparator/determiner 172d compares the distance calculated by the distance calculator 172b to the threshold set by the threshold setter 172c.

In step S106, the comparator/determiner 172d determines the filter for the target pixel according to the result of the comparison between the distance and the threshold.

In step S107, the predicted pixel generator 173 generates a predicted pixel from the prediction reference pixels using the filter determined by the filter determiner 172A.

If all the predicted pixels have been generated in the target block (step S108: YES), the intra predictor 170 (predicted pixel generator 173) outputs the intra-predicted image corresponding to the target block.

Otherwise, if all the predicted pixels have not been generated in the target block (step S108: NO), the flow proceeds to process the next prediction target pixel in the target block (step S109), and for the next prediction target pixel, the distance calculation (step S103), distance-to-threshold comparison (step S105), filter determination (step S106) and predicted pixel generation (step S106) are carried out.

### (1.5. Modification of First Embodiment)

In the first embodiment described above, it is assumed that when the distance calculator 172b calculates the distance between a prediction target pixel and a reference pixel, the distance calculator 172b calculates the horizontal distance between the prediction target pixel and the reference pixel on the left of the prediction target pixel or calculates the vertical distance between the prediction target pixel and the reference pixel above the prediction target pixel. In this case, the reference pixel used to calculate the distance does not need to be a prediction reference pixel (i.e., a reference pixel that is used for prediction itself).

In contrast, in this modification, a prediction reference pixel (i.e., a reference pixel that is used for prediction itself) is used as the reference pixel used to calculate the distance. A reference pixel determiner 172a according to the modification determines to use, as the reference pixel to be used to calculate the distance, the reference pixel corresponding to the intersection of the line of reference pixels formed by a plurality of prediction reference pixels and the line segment extended in the prediction direction of an intra prediction mode being used from the position of a prediction target pixel. A distance calculator 172b calculates the distance between the position of the reference pixel determined by the reference pixel determiner 172a and the position of the prediction target pixel. A suitable filter can be determined by calculating the distance to a reference pixel that is used for prediction itself.

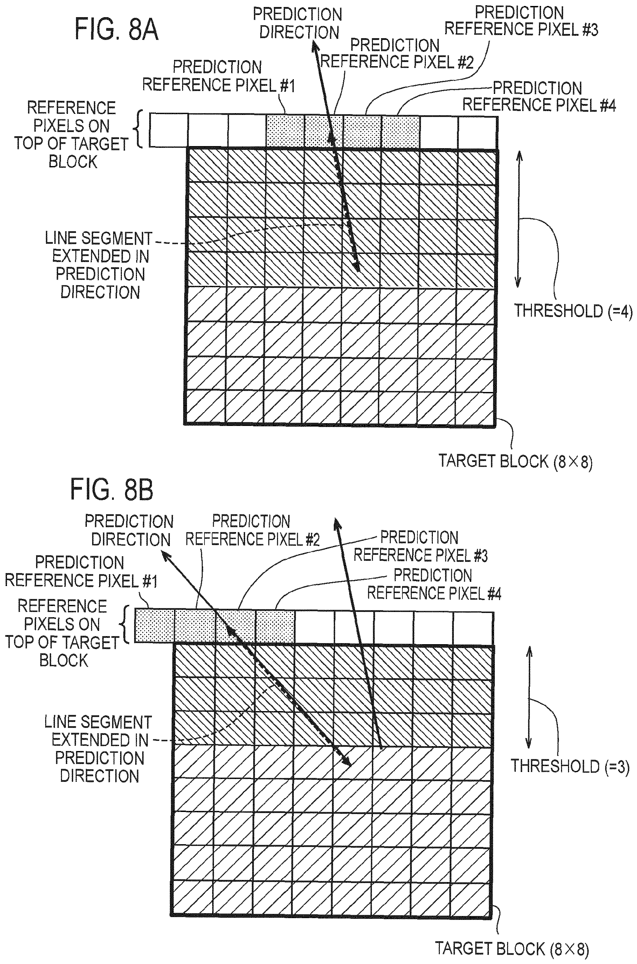

Figure 8 illustrates an example of operations of a filter determiner 172A according to the modification. In Figure 8, the block size of the target block is 8×8.

As shown in Figure 8, the reference pixel determiner 172a determines to use, as the reference pixel to be used to calculate the distance, the reference pixel corresponding to the intersection of the line of reference pixels formed by a plurality of prediction reference pixels (prediction reference pixels #1 to #4) and the line segment extended in the prediction direction of an intra prediction mode being used from the position of a prediction target pixel.

In the example in Figure 8(a), the reference pixel determiner 172a determines to use the prediction reference pixel #2 as the reference pixel to be used to calculate the distance. Also, in this modification, the threshold setter 172c sets the threshold that are to be compared to the distance according to the intra prediction mode. Here, it is assumed that the threshold set by the threshold setter 172c is "4."

In the example in Figure 8(b), the reference pixel determiner 172a determines to use the prediction reference pixel #3 as the reference pixel to be used to calculate the distance. Also, in this modification, the threshold setter 172c sets the threshold that are to be compared to the distance according to the intra prediction mode. Here, it is assumed that the threshold set by the threshold setter 172c is "3."

### <2. Second Embodiment

A second embodiment will be described with a center focus on differences from the first embodiment.

In the first embodiment, the type of filter used to generate a predicted pixel is determined on the assumption that the filter is a 4-tap interpolation filter. In contrast, in the second embodiment, assuming that the type of filter is fixed, the number of taps of the filter (i.e., the number of prediction reference pixels) is determined.

### (2.1. Configuration of Intra Predictor)

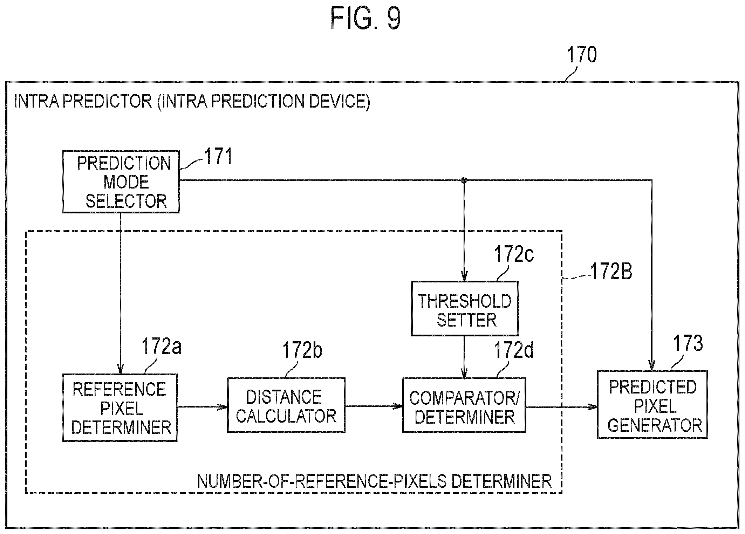

Figure 9 illustrates a configuration of an intra predictor 170 of an image encoding device 1 according to the present embodiment. An intra predictor 240 of an image decoding device 2 has a configuration similar to that of the intra predictor 170 of the image encoding device 1 and operates in a similar manner.

As shown in Figure 9, the intra predictor 170 according to the present embodiment includes a prediction mode selector 171, a number-of-reference-pixels determiner 172B and a predicted pixel generator 173. The prediction mode selector 171 is similar to that of the first embodiment.

The number-of-reference-pixels determiner 172B determines the number of prediction reference pixels (the number of taps of a filter) to be used to generate a predicted pixel. The number-of-reference-pixels determiner 172B determines the number of prediction reference pixels for each pixel position in a target block of intra prediction.

The predicted pixel generator 173 generates a predicted pixel by applying a filter to prediction reference pixels that are selected from the reference pixels around the target block of intra prediction and the number of which is determined by the number-of-reference-pixels determiner 172B.

In this manner, the number of prediction reference pixels to be used to generate a predicted pixel can be changed on a block-by-block or pixel-by-pixel basis, which enables improvement of the prediction accuracy of intra prediction. In addition, even when only one type of filter is used, the characteristics of the filter can be altered by changing the number of prediction reference pixels.

In the present embodiment, when the number-of-reference-pixels determiner 172B determines the number of prediction reference pixels for a pixel position (prediction target pixel) in the target block of intra prediction, the number-of-reference-pixels determiner 172B determines the number of prediction reference pixels depending on the distance between the pixel position and the position of the reference pixel nearest to the pixel position.

Since the filter is determined for each pixel position in a block as described above, a suitable filter can be used on a pixel-by-pixel basis in the target block. For example, suitable filter characteristics can be achieved by reducing the number of prediction reference pixels when a predicted pixel is generated at a pixel position nearer to the reference pixel or increasing the number of prediction reference pixels when a predicted pixel is generated at a pixel position farther from the reference pixel.

A configuration of the number-of-reference-pixels determiner 172B according to the present embodiment is now described. As shown in Figure 9, the number-of-reference-pixels determiner 172B includes a reference pixel determiner 172a, a distance calculator 172b, a threshold setter 172c and a comparator/determiner 172d.

The reference pixel determiner 172a, the distance calculator 172b and the threshold setter 172c operates similar to those of the first embodiment or the modification thereof, respectively.

The comparator/determiner 172d determines the number of prediction target pixels for a target pixel by comparing the distance calculated by the distance calculator 172b to the threshold set by the threshold setter 172c, and outputs the determined number of prediction target pixels to the predicted pixel generator 173. For example, the comparator/determiner 172d determines to use the number of prediction target pixels A for a target pixel the distance of which to the reference pixel is less than or equal to the threshold and determines to use the number of prediction target pixels B for a target pixel the distance of which to the reference pixel is greater than the threshold. The number of prediction pixels A is smaller than the number of prediction pixels B. For example, the number of prediction target pixels A is "4" and the number of prediction target pixels A is "5" or "6."

### (2.2. Operation Flow of Intra Predictor)

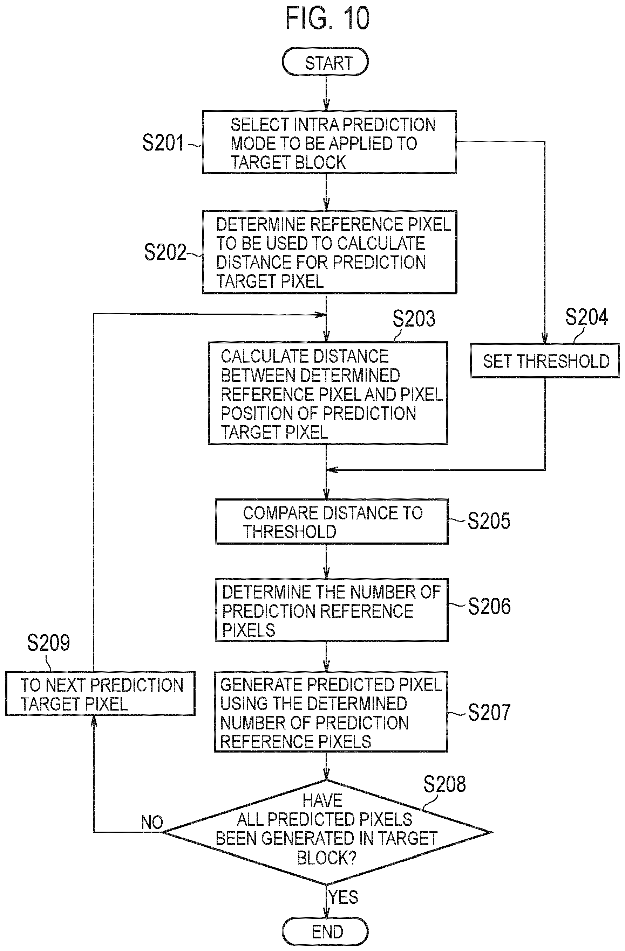

Figure 10 illustrates an exemplary operation flow of the intra predictor 170 of the image encoding device 1 according to the present embodiment.

As shown in Figure 10, in step S201, the prediction mode selector 171 selects an intra prediction mode to be applied to a target block.

In step S202, the reference pixel determiner 172a determines the reference pixel to be used for distance calculation for each pixel position in the target block according to the intra prediction mode selected by the prediction mode selector 171.

In step S203, the distance calculator 172b calculates the distance between the position of the reference pixel determined by the reference pixel determiner 172a and the position of a target pixel.

In step S204, the threshold setter 172c sets the threshold that are to be compared to the distance according to the intra prediction mode selected by the prediction mode selector 171.

In step S205, the comparator/determiner 172d compares the distance calculated by the distance calculator 172b to the threshold set by the threshold setter 172c.

In step S206, the comparator/determiner 172d determines the number of prediction reference pixels (the number of taps of a filter) for the target pixel according to the result of the comparison between the distance and the threshold.

In step S207, the predicted pixel generator 173 generates a predicted pixel from prediction reference pixels, the number of which is determined by a filter determiner 172A.

If all the predicted pixels have been generated in the target block (step S208: YES), the intra predictor 170 (predicted pixel generator 173) outputs the intra-predicted image corresponding to the target block.

Otherwise, if all the predicted pixels have not been generated in the target block (step S208: NO), the flow proceeds to process the next prediction target pixel in the target block (step S209), and for the next prediction target pixel, the distance calculation (step S203), distance-to-threshold comparison (step S205), filter determination (step S206) and predicted pixel generation (step S206) are carried out.

### (2.3. Modification of Second Embodiment)

In the second embodiment described above, the number-of-reference-pixels determiner 172B determines the number of prediction reference pixels for each pixel position in a target block of intra prediction depending on the distance between the pixel position and the position of a reference pixel.

In contrast, in this modification, when a number-of-reference-pixels determiner 172B determines the number of prediction reference pixels for a target block of intra prediction, the number-of-reference-pixels determiner 172B determines the number of prediction reference pixels depending on the block size of the target block. For example, suitable filter characteristics can be achieved by reducing the number of prediction reference pixels when the block size is smaller or increasing the number of prediction reference pixels when the block size is larger.

The length in the vertical direction × the length in the horizontal direction of the target block may be used as the block size, one of the length in the vertical direction and the length in the horizontal direction of the target block may be fixedly used as the block size, or one of the length in the vertical direction and the length in the horizontal direction of the target block may be selectively used as the block size depending on the direction of intra prediction. If one of the length in the vertical direction and the length in the horizontal direction of the target block is selectively used as the block size depending on the direction of intra prediction, the number-of-reference-pixels determiner 172B may use the length in the horizontal direction as the block size if the intra prediction mode is "2" to "34" or may use the length in the vertical direction as the block size if the intra prediction mode is "35" to "66."

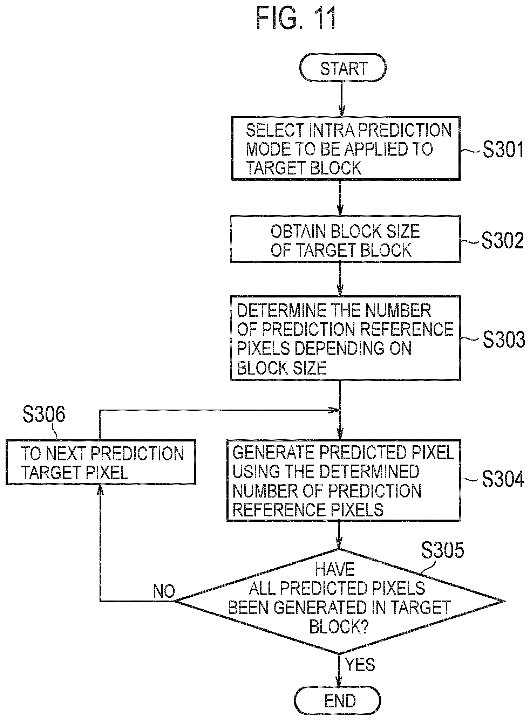

Figure 11 illustrates an exemplary operation flow of an intra predictor 170 of an image encoding device 1 according to the modification.

As shown in Figure 11, in step S301, a prediction mode selector 171 selects an intra prediction mode to be applied to a target block.

In step S302, a number-of-reference-pixels determiner 172B obtains the block size of the target block.

In step S303, the number-of-reference-pixels determiner 172B determines the number of prediction reference pixels (the number of taps of a filter) depending on the block size of the target block. For example, the number-of-reference-pixels determiner 172B compares the block size of the target block to a threshold and determines to use the number of prediction target pixels A if the block size is less than or equal to the threshold or determines to use the number of prediction target pixels B if the block size is greater than the threshold.

In step S304, a predicted pixel generator 173 generates a predicted pixel from prediction reference pixels, the number of which is determined by a filter determiner 172A.

If all the predicted pixels have been generated in the target block (step S305: YES), the intra predictor 170 (predicted pixel generator 173) outputs the intra-predicted image corresponding to the target block.

Otherwise, if all the predicted pixels have not been generated in the target block (step S308: NO), the flow proceeds to process the next prediction target pixel in the target block (step S309), and for the next prediction target pixel, the predicted pixel generation (step S304) is carried out.

### <3. Alternative Embodiment

In the first and second embodiments, pixel copy is not described. If the intra prediction mode is "34" or less, the reference pixels on top of a target block may be copied to the left of the target block, or if the intra prediction mode is "35" or greater, the reference pixels on the left of a target block may be copied to top of the target block. By such pixel copy, reference pixels can be arranged in line in the vertical or horizontal direction, which enables filtering to be performed uniformly. If such pixel copy is carried out, a reference pixel determiner 172a may use the copied reference pixels for the distance calculation mentioned above.

A program may be provided to cause a computer to execute the operations of the image encoding device 1 and a program may be provided to cause a computer to execute the operations of the image decoding device 2. The program may be stored in a computer-readable medium. The program can be installed on a computer from a computer-readable medium having the program stored thereon. The computer-readable medium having the program stored thereon may be a non-transitory recording medium. The non-transitory recording medium may include, but is not limited to, a CD-ROM and a DVD-ROM. The image encoding device 1 may be embodied as a semiconductor integrated circuit (chipset, SoC, etc.) by integrating the circuits that execute the respective operations of the image encoding device 1. Similarly, the image decoding device 2 may be embodied as a semiconductor integrated circuit (chipset, SoC, etc.) by integrating the circuits that execute the respective operations of the image decoding device 2.

The embodiments have been described in detail above with reference to the drawings. Specific configurations are not limited to the above-described configurations, and various design changes, and the like are possible within the scope not deviating from the gist.

Japanese Patent Application No. 2018-65780 (filed on March 29, 2018) is incorporated herein by reference in its entirety.

## Claims

1. An intra prediction device for performing intra prediction of each of blocks obtained by dividing images in units of frames that constitute a video, the intra prediction device comprising:
a filter determiner configured to determine a filter to be used to generate a predicted pixel from among multiple types of filters for each pixel position in a target block of the intra prediction; and
a predicted pixel generator configured to generate the predicted pixel from reference pixels around the target block using the filter determined by the filter determiner, wherein
when the filter determiner determines the filter for a pixel position in the target block, the filter determiner is configured to determine the filter depending on a distance between the pixel position and a position of a reference pixel nearest to the pixel position.

2. The intra prediction device according to claim 1, further comprising
a prediction mode selector configured to select an intra prediction mode to be applied to the target block, wherein
the filter determiner comprises:
a reference pixel determiner configured to determine a reference pixel nearest to the pixel position; and
a distance calculator configured to calculate a distance between the pixel position and a position of the reference pixel determined by the reference pixel determiner, and
the reference pixel determiner is configured to determine which of reference pixels on top of and on the left of the target block to be used as the reference pixel nearest to the pixel position according to the intra prediction mode selected by the prediction mode selector.

3. The intra prediction device according to claim 2, wherein
the filter determiner further comprises:
a threshold setter configured to set one or more thresholds that are to be compared to the distance; and
a comparator/determiner configured to determine the filter for the pixel position by comparing the distance calculated by the distance calculator to the one or more thresholds set by the threshold setter, wherein
the threshold setter is configured to set the one or more thresholds according to the intra prediction mode selected by the prediction mode selector.

4. The intra prediction device according to claim 2 or 3, wherein
the predicted pixel generator is configured to generate the predicted pixel by applying the filter to a plurality of prediction reference pixels selected from among reference pixels around the target block according to the intra prediction mode selected by the prediction mode selector,
the reference pixel determiner is configured to determine a reference pixel corresponding to an intersection of a line of reference pixels formed by the plurality of prediction reference pixels and a line segment extended in a prediction direction of the intra prediction mode from the pixel position, and
the distance calculator is configured to calculate a distance between the pixel position and a position of the reference pixel determined by the reference pixel determiner.

5. An intra prediction device for performing intra prediction of each of blocks obtained by dividing images in units of frames that constitute a video, the intra prediction device comprising:
a number-of-reference-pixels determiner configured to determine a number of prediction reference pixels to be used to generate a predicted pixel; and
a predicted pixel generator configured to generate the predicted pixel by applying a filter to prediction reference pixels that are selected from reference pixels around a target block of the intra prediction and the number of which is determined by the number-of-reference-pixels determiner, wherein
the number-of-reference-pixels determiner is configured to determine the number of prediction reference pixels for each target block of the intra prediction or for each pixel position in a target block of the intra prediction.

6. The intra prediction device according to claim 5, wherein
when the number-of-reference-pixels determiner determines the number of prediction reference pixels for a pixel position in a target block of the intra prediction, the number-of-reference-pixels determiner is configured to determine the number of prediction reference pixels depending on a distance between the pixel position and a position of a reference pixel nearest to the pixel position.

7. The intra prediction device according to claim 5, wherein
when the number-of-reference-pixels determiner determines the number of prediction reference pixels for a target block of the intra prediction, the number-of-reference-pixels determiner is configured to determine the number of prediction reference pixels depending on a block size of the target block.

8. An image encoding device comprising the intra prediction device according to any one of claims 1 to 7.

9. An image decoding device comprising the intra prediction device according to any one of claims 1 to 7.

10. A program for causing a computer to function as the intra prediction device according to any one of claims 1 to 7.
